(19) Europäisches Patentamt

European Patent Office

Office européen des brevets

(11) Numéro de publication: **0 520 887 B1**

(12) **FASCICULE DE BREVET EUROPEEN**

(45) Date de publication du fascicule du brevet: **11.10.95** (51) Int. Cl.6: **B01J 27/045**, C10G 45/52

(21) Numéro de dépôt: **92401787.4**

(22) Date de dépôt: **25.06.92**

Le dossier contient des informations techniques présentées postérieurement au dépôt de la demande et ne figurant pas dans le présent fascicule.

(54) **Catalyseur et procédé d'hydroraffinage.**

(30) Priorité: **26.06.91 FR 9107876**

(43) Date de publication de la demande:
**30.12.92 Bulletin 92/53**

(45) Mention de la délivrance du brevet:
**11.10.95 Bulletin 95/41**

(84) Etats contractants désignés:
**BE DE GB IT NL**

(56) Documents cités:
**GB-A- 1 565 754**
**US-A- 4 115 463**
**US-A- 4 279 737**

(73) Titulaire: **ELF ANTAR FRANCE**
**Tour Elf,**
**Place de la Coupole**
**F-92078 Paris La Defense (FR)**

(72) Inventeur: **Breysse, Michèle**
**15 rue Pierre Bourgeois**
**F-69300 Caluire (FR)**
Inventeur: **Orlewski, Jacek**
**20 rue du Docteur Dolard**
**F-69100 Villeurbanne (FR)**
Inventeur: **Courières, Thierry des**
**152 bld. Yves Farge**
**F-69007 Lyon (FR)**
Inventeur: **Vrinat, Michel**
**24 rue Pierre Bourgeois**
**F-69300 Caluire (FR)**

(74) Mandataire: **Boillot, Marc**
**SOCIETE NATIONALE ELF AOUITAINE (PRO-DUCTION)**
**Dept. Propriété Industrielle**
**Tour Elf**
**F-92078 Paris la Défense Cédex 45 (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention concerne un catalyseur d'hydroraffinage renfermant des sulfures de ruthénium et d'au moins un autre métal et un procédé d'hydroraffinage de charges hydrocarbonées mettant en oeuvre ledit catalyseur.

Le pétrole et les fractions pétrolières obtenues par distillation ou traitement du pétrole sont des mélanges complexes où, à côté des hydrocarbures, se trouvent des composés renfermant des hétéroatomes, comme le soufre, l'azote et l'oxygène. Les charges lourdes, dont l'utilisation se généralise, contiennent des quantités importantes de composés hétéroatomiques. Ces charges lourdes sont constituées par exemple de bruts lourds, de schistes bitumineux ou de résidus lourds de raffineries de pétrole.

Les composés hétéroatomiques sont des impuretés nuisibles à la bonne qualité des produits pétroliers. Ils sont notamment responsables des problèmes liés à la pollution, à la corrosion, à l'odeur et à la stabilité. Les composés soufrés et azotés peuvent également empoisonner les catalyseurs usuels des procédés de raffinage.

Il est donc important de les éliminer au cours du raffinage. Il s'agit en général d'un traitement à l'hydrogène, en présence d'un catalyseur qui favorise la rupture des liaisons carbone-hétéroatome. Ce traitement est appelé hydroraffinage.

Les principales réactions d'hydroraffinage sont la désulfuration, la désazotation et la saturation des composés aromatiques.

La désulfuration consiste à transfomer le soufre contenu dans les composés organiques en hydrogène sulfuré. La désazotation consiste à transfomer l'azote des composés organiques en ammoniac.

Des procédés d'hydrodésulfuration et d'hydrodéazotation utilisant comme catalyseurs des sulfures simples de Ruthénium, sont décrits dans le brevet US-A-4 279 737

Un effort de recherche considérable a été déployé pour trouver des catalyseurs d'hydroraffinage efficaces, résistants à la désactivation par les hétéroatomes.

Le catalyseurs d'hydroraffinage les plus couramment utilisés sont des catalyseurs bimétalliques à base de nickel, de molybdène, de tungstène ou de cobalt. Ces métaux sont déposés sur des supports par imprégnation à l'aide de leurs sels hydrosolubles, puis transformés en sulfures. Les supports sont en général à base d'oxydes réfractaires, comme l'alumine ou les silice-alumines.

Parmi les catalyseurs bimétalliques d'hydroraffinage nous pouvons mentionner les catalyseurs à base de nickel/molybdène et de cobalt/molybdène. Le catalyseur HR 346 de PROCATALYSE renferme du nickel/molybdène sur alumine et le HR 348 du nickel/molybdène sur alumine dopée.

Il est connu que ces catalyseurs commerciaux réalisent assez facilement la transformation des quinoléines en alkylanilines, mais ces dernières, bien que facilement désazotées lorsqu'elles sont pures, sont très peu converties en présence de quinoléines. Il se produit donc une accumulation d'alkylanilines dans les charges, ce qui constitue actuellement l'une des principales limitations des rendements en désazotation obtenus en raffinerie.

Nous avons trouvé maintenant un nouveau catalyseur d'hydroraffinage, très peu inhibé par la présence de composés polyaromatiques. Son effet catalytique sur la désazotation d'une alkylaniline, comme la diéthylaniline, ne diminuent que très légèrement en présence de quinoléine. Ceci reste vrai même dans les conditions opératoires douces.

Le catalyseur selon l'invention est également efficace comme catalyseur d'hydrogénation des composés aromatiques. Dans cette application il est beaucoup moins sensible à l'effet inhibant de l'hydrogène sulfuré que les catalyseurs commerciaux.

Son emploi devient donc très avantageux à des fortes pressions d'hydrogène sulfuré.

Le catalyseur d'hydroraffinage de charges hydrocarbonées selon l'invention renfermant des sulfures de ruthénium sur un support d' oxydes réfractaires est caractérisé en ce qu'il contient un deuxième métal sulfuré du groupe constitué par le nickel et le cobalt.

Le catalyseur renferme entre 1 à 15% poids et de préférence entre 5 et 10% poids de métal.

Le catalyseur renferme de préférence des sulfures de ruthénium et de nickel.

Il est caractérisé par le rapport atomique entre les deux métaux. Ce rapport (r) est défini de la manière suivante : r = teneur en atomes du deuxième métal/teneur en atomes du deuxième métal + teneur en atomes de ruthénium.

Dans le cas d'un catalyseur bimétallique, ce rapport (r) est compris entre 0,05 et 0,95 et de préférence entre 0,1 et 0,7. Le rapport est avantageusement compris entre 0,2 et 0,6.

Parmi les oxydes réfractaires on peut mentionner les oxydes d'aluminium, de zirconium, de titane ou leurs mélanges.

On utilise de préférence les oxydes d'aluminium comme les différentes alumines.

2

EP 0 520 887 B1

Les catalyseurs selon l'invention peuvent être utilisés seuls comme catalyseurs d'hydroraffinage. Il peut cependant être avantageux de les utiliser en association avec des catalyseurs classiques d'hydroraffinage à base d'oxydes réfractaires et/ou de zéolithes.

Les catalyseurs sont préparés par imprégnations successives de l'oxyde réfractaire par des solutions de sels métalliques. En général on procède sans excès de solution. L'ordre de l'imprégnation peut être quelconque, mais il est préférable d'imprégner le support d'abord par une solution d'un sel de ruthénium. On utilise de préférence des solutions aqueuses. Parmi les sels hydrosolubles du ruthénium nous pouvons mentionner le trichlorure de ruthénium et l'hexaaminoruthénium. L'imprégnation a lieu en général à la température ambiante. Le produit obtenu est simplement séché, puis on procède à la deuxième imprégnation par une solution du deuxième composant métallique. Si le deuxième composant est le nickel, on peut utiliser par exemple une solution de chlorure de nickel. Le support catalytique renfermant les deux sels métalliques est séché.

Avant l'utilisation, le catalyseur est sulfuré par un mélange gazeux, renfermant de l'hydrogène sulfuré. En général il s'agit de mélange de l'hydrogène sulfuré avec de l'hydrogène ou de l'azote. La sulfuration a lieu en général dans le réacteur d' hydroraffinage.

Les catalyseurs selon l'invention sont efficaces dans les réactions d'hydroraffinage comme la désulfuration, la désazotation ou l'hydrogénation. Leur effet catalytique ne diminue que très légèrement en présence de composés polyaromatiques comme les quinoléines. Leur effet hydrogénant est également peu inhibé par l'hydrogène sulfuré.

Les conditions opératoires de mise en oeuvre des catalyseurs selon l'invention sont celles utilisées habituellement dans les procédés d'hydroraffinage. La température est comprise entre 250 et 500°C.

La vitesse spatiale liquide de la charge exprimée en $m^3$ de charge liquide par heure et par $m^3$ de catalyseur est généralement comprise entre 0,02 et $6h^{-1}$.

Le pression totale est en général comprise entre 1 et 80 bars.

Les exemples suivants illustrent l'invention sans toutefois la limiter.

EXEMPLE 1

Préparation du catalyseur.

10g d'alumine GFS-200 (PROCATALYSE) broyée, tamisée (fraction 0,08mm - 0,125mm) et séchée sous vide pendant une nuit à 110°C. Elle est imprégnée sans excès de solution par 2g de $RuCl_3$. $3H_2O$ (ALDRICH Chemie) en solution aqueuse. Il ne reste donc pas de solution résiduelle.

Le support imprégné est laissé à température ambiante quelques heures dans le but de permettre la diffusion dans les pores.

Le produit est séché sous air à 110°C pendant une nuit afin d'éliminer une partie de l'eau restant dans les pores. Le nickel est introduit par l'imprégnation du catalyseur sec par une solution de 0,48g de $NiCl_2$ (MERCK) en suivant le même mode opératoire que pour le ruthénium.

Le solide est séché sous air à 110°C pendant une nuit. Avant l'utilisation ce solide est sulfuré par un mélange d'hydrogène sulfuré et d'azote à 15% d'hydrogène sulfuré. La réaction a lieu à 600°C pendant 4 heures. La vitesse de montée en température est de 0,16 C°/$s^{-1}$, le débit volumique est de 1,1. $10^{-6}$ $m^3$. $s^{-1}$.

La teneur totale en métal est de 7% poids. La composition atomique du catalyseur, est indiqué par le rapport atomique (r).

$$r = \frac{\text{teneur en atomes de Ni}}{\text{teneur en atomes de Ni + teneur en atomes de Ru}}$$

r = 0,44.

Avec le même mode opératoire, nous avons préparé des catalyseurs à (r) variable.

EXEMPLE 2

Il a été constaté, au cours de l'hydrotraitement des coupes lourdes ou moyennes des produits de la distillation du brut, une accumulation des alkylanilines dans les effluents. Elle a été attribuée à l'inhibition de l'HDN des alkylanilines formées au cours de la première coupure C-N par les composés polycycliques présents initialement dans la charge. Le test utilisé simule avec des molécules modèles, sur micropilote, ce

3

phénomène. On étudie ainsi l'inhibition de l'HDN de la 2,6-diéthylaniline par des quantités variables de quinoléine. La réaction est réalisée en phase gazeuse, dans un microréacteur dynamique fonctionnant sous pression. L'ensemble de l'installation, sous pression élevée d'hydrogène est isolée thermiquement. L'alimentation se fait à débit constant et sous une pression fixée par la pression totale de la réaction. Les charges en réactifs (solvant + DEA + quinoléine) et le mélange sulfurant alimentent 2 pompes doseuses GILSON permettant de travailler à débit variable. Les produits de la réaction sous forme gazeuse sont détendus à pression atmosphérique par le biais d'une vanne de régulation à commande pneumatique. Les analyses sont réalisées en ligne par un chromatographe à ionisation de flamme.

Après sulfuration nous avons refroidi le lit catalytique pour protéger le catalyseur avant de commencer le test. Dès que nous avons obtenu la température de 230°C nous avons introduit la DEA pure en conservant le gaz sulfurant.

Après 30 minutes nous avons alimenté en hydrogène tout en poursuivant le refroidissement. Dès que la pression totale a atteint $5.10^5$ Pa nous avons arrêté l'injection sulfurant (T = 180°C) et augmenté lentement la pression d'hydrogène jusqu'à une pression de $28,32.10^5$ Pa d'hydrogène. La pression totale est de $30.10^5$ Pa.

Les pressions partielles sont les suivantes :

| | |
|---|---|
| n-heptane | $0,33.10^5$ Pa |
| méthane | $0,66.10^5$ Pa |
| DEA | $0,02.10^5$ Pa |
| Hydrogène | $28,32.10^5$ Pa |
| $H_2S$ | $0,66.10^5$ Pa |
| (quinoléine) | $0,002.10^5$ Pa |

Après un palier de 2 heures à 150°C nous sommes montés à 350°C avec une pente de 120°C/heure.

Le débit de la charge est de 12,0 ml/h, le débit de l'hydrogène de 50,0 l/h.

Nous avons utilisé trois mélanges renfermant respectivement 0, 10% et 30% de quinoléine par rapport à la diéthylaniline. Nous avons utilisé un lit catalytique renfermant 7% poids de Ru/Ni sur alumine, puis un catalyseur commercial, HR 348 de PROCATALYSE (NiMo sur alumine dopée).

Les résultats donnant des taux de conversion de la DEA en présence de diverses concentrations de quinoléine sont rapportés dans le tableau 1.

TABLEAU 1

| Cata | 0 % QUINO | 10 % QUINO | 30 % QUINO |
|---|---|---|---|
| Ru/Ni/alumine r = 0,44 | 33,0 | 17,0 | 16,5 |
| HR 348 | 80,1 | 25,7 | 8,5 |

Les résultats montrent que le catalyseur Ru-Ni/Alumine résiste beaucoup mieux à l'inhibition de la réaction d'hydrodésazotation de la diéthylaniline par la quinoléine que le catalyseur commercial.

EXEMPLE 3 (Utilisation en test catalytique sur molécule modèle : hydrogénation du biphényle)

La réaction est réalisée en phase gazeuse dans un microréacteur dynamique sous pression.

Le catalyseur est présulfuré en présence d'un mélange $N_2/H_2S(15\%)$, 4 heures à 400°C ou à 600°C.

L'hydrogène gaz-réactif est saturé en biphényle dans un saturateur-condenseur travaillant à la même pression que le réacteur. Un système de capillaires assure la stabilisation de la pression ainsi que la détente à la pression atmosphérique. L'analyse est réalisée dans un chromatographe à ionisation de flamme. Les mesures des taux de conversion en biphényle permettent de calculer les vitesses spécifiques par gramme de catalyseurs, $A_s$ en appliquant la relation :

$$A_s = Q_{BP}\text{x taux de conversion/m}$$

avec $Q_{BP}$ = débit en biphényle

m : masse de catalyseur

Les conditions opératoires sont les suivantes :

$$P_{Totale} : 23.10^5 \text{ Pa} \qquad \text{m cata} : 25mg$$
$$P_{BP} \qquad : 8.10^2 \text{ Pa} \qquad Q_{BP} \qquad : 5,7.10^{-8} \text{ mol/s}$$
$$P_{H_2S} \qquad : 435.10^2 \text{ Pa} \qquad Q_{H_2} \qquad : 1,5.10^{-4} \text{ mol/s}$$

Le tableau suivant donne les activités spécifiques à 530K du cartalyseur $NiRu/Al_2O_3$ (r = 0,35) sulfuré à 400°C et 600°C comparées à celle du catalyseur commercial $NiMo/Al_2O_3$ (HR 346).

### TABLEAU 2

| Catalyseur | As mol.s$^{-1}$.g$^{-1}$ |
|---|---|
| NiRu/Al$_2$O$_3$ sulfuré 400°C | 5,3. 10$^{-8}$ |
| NiRu/Al$_2$O$_3$ sulfuré 600°C | 5,6. 10$^{-8}$ |
| HR 346 | 1.3. 10$^{-8}$ |

Ces résultats montrent la très bonne activité du catalyseur $NiRu/Al_2O_3$ dans l'hydrogénation du biphényle en présence d'une forte pression d'$H_2S$. Celui-ci résiste beaucoup mieux à l'inhibition par $H_2S$ que le catalyseur commercial.

**Revendications**

1. Catalyseur d'hydroraffinage de charges hydrocarbonées renfermant des sulfures de ruthénium sur un support d'oxydes réfractaires, caractérisé en ce qu'il contient un deuxième métal sulfuré du groupe constitué par le nickel et le cobalt.

2. Catalyseur selon la revendication 1 caractérisé en ce qu'il renferme 1 à 15 % poids et de préférence entre 5 à 10 % poids de métal.

3. Catalyseur selon l'une des revendications 1 et 2 caractérisé en ce que le rapport atomique r défini comme la teneur en atomes du deuxième métal/teneur en atomes du deuxième métal + teneur en atomes de Ru, est compris entre 0,05 et 0,95 et de préférence entre 0,1 et 0,7.

4. Catalyseur selon la revendication 3 caractérisé en ce que le rapport atomique est compris entre 0,2 et 0,6.

5. Catalyseur selon l'une des revendications 3 et 4 caractérisé en ce qu'il renferme des sulfures de ruthénium et de nickel.

6. Catalyseur selon l'une des revendications 1 à 5 caractérisé en ce que l'oxyde réfractaire est un oxyde d'aluminium, de zirconium, de titane ou leurs mélanges.

7. Catalyseur selon la revendication 6 caractérisé en ce que l'oxyde réfractaire est un oxyde d'aluminium.

8. Catalyseur selon l'une des revendications 1 à 7 caractérisé en ce qu'il est associé à un catalyseur d'hydroraffinage classique.

9. Procédé d'hydroraffinage des charges hydrocarbonées caractérisé en ce qu'on utilise un catalyseur selon les revendications 1 à 9.

10. Procédé selon la revendication 9 caractérisé en ce que l'hydroraffinage est une désazotation.

11. Procédé selon la revendication 9, caractérisé en ce que l'hydroraffinage est l'hydrogénation des composés aromatiques.

**Claims**

1. Hydrorefining catalyst for hydrocarbon charges, which contains ruthenium sulphides on a support of refractory oxides, characterised in that it contains a second sulphur-containing metal from the group consisting of nickel and cobalt.

2. Catalyst according to Claim 1, characterised in that it contains from 1 to 15% by weight and preferably from 5 to 10% by weight of metal.

3. Catalyst according to either Claim 1 or Claim 2, characterised in that the atomic ratio r defined as the content of atoms of the second metal/content of atoms of the second metal + content of Ru atoms, is between 0.05 and 0.95 and preferably between 0.1 and 0.7.

4. Catalyst according to Claim 3, characterised in that the atomic ratio is between 0.2 and 0.6.

5. Catalyst according to either Claim 3 or Claim 4, characterised in that it contains ruthenium sulphides and nickel sulphides.

6. Catalyst according to any one of Claims 1 to 5, characterised in that the refractory oxide is an aluminium, zirconium or titanium oxide or any mixture thereof.

7. Catalyst according to Claim 6, characterised in that the refractory oxide is an aluminium oxide.

8. Catalyst according to any one of Claims 1 to 7, characterised in that it is associated with a customary hydrorefining catalyst.

9. Process for the hydrorefining of hydrocarbon charges, characterised in that a catalyst according to Claims 1 to 9 is used.

10. Process according to Claim 9, characterised in that the hydrorefining is a denitrification process.

11. Process according to Claim 9, characterised in that the hydrorefining is the hydrogenation of aromatic compounds.

**Patentansprüche**

1. Katalysator für die Hydroraffination von Kohlenwasserstofffraktionen, der auf einem Träger aus Feuerfestoxiden Rutheniumsulfide enthält, dadurch **gekennzeichnet,** daß er außerdem noch ein zweites Sulfid eines Metalls der Gruppe, bestehend aus Nickel und Kobalt, enthält.

2. Katalysator nach Anspruch 1, dadurch **gekennzeichnet,** daß er 1 bis 15 Gew.-% und vorzugsweise 5 bis 10 Gew.-% Metall enthält.

3. Katalysator nach einem der Ansprüche 1 und 2, dadurch **gekennzeichnet,** daß das Atomverhältnis r, definiert als der Gehalt an Atomen des zweiten Metalls/Gehalt an Atomen des zweiten Metalls + Gehalt an Ru-Atomen, zwischen 0,05 und 0,95 und vorzugsweise zwischen 0,1 und 0,7 liegt.

4. Katalysator nach Anspruch 3, dadurch **gekennzeichnet,** daß das Atomverhältnis zwischen 0,2 und 0,6 liegt.

5. Katalysator nach einem der Ansprüche 3 und 4, dadurch **gekennzeichnet,** daß er Ruthenium- und Nickelsulfid enthält.

6. Katalysator nach einem der Ansprüche 1 bis 5, dadurch **gekennzeichnet,** daß das Feuerfestoxid ein Aluminium-, Zirkonium- oder Titanoxid oder Gemische davon darstellt.

7. Katalysator nach Anspruch 6, dadurch **gekennzeichnet,** daß das Feuerfestoxid ein Aluminiumoxid ist.

8. Katalysator nach einem der Ansprüche 1 bis 7, dadurch **gekennzeichnet,** daß er mit einem klassischen Katalysator zur Hydroraffination verbunden ist.

9. Verfahren zur Hydroraffination von Kohlenwasserstofffraktionen, dadurch **gekennzeichnet,** daß man einen Katalysator nach Anspruch 1 bis 9 verwendet.

10. Verfahren nach Anspruch 9, dadurch **gekennzeichnet,** daß die Hydroraffination eine Entstickung ist.

11. Verfahren nach Anspruch 9, dadurch **gekennzeichnet,** daß die Hydroraffination die Hydrierung aromatischer Verbindungen darstellt.